# EUROPEAN PATENT APPLICATION

(11) **EP 2 660 497 A1**
(43) Date of publication of application: **06.11.2013**
(21) Application number: 13166162.1
(22) Date of filing: 02.05.2013
(51) Int. Cl.: F16L 13/02, G21C 13/032, G21C 13/036

(54) **Control rod drive (CRD) tubes, method of manufacture, and installation thereof**

(30) Priority: 01.05.2012 US 201261640967 P; 17.04.2013 US 201313864780
(71) Applicant: Electric Power Research Institute, Inc., Charlotte, NC 28262 (US)
(72) Inventor: Gandy, David W., China Grove, NC 28023 (US); Frederick, Greg, Harrisburg, NC 28075 (US)
(74) Representative: Thomas, Nadine

(57) **Abstract**

A control rod drive (CRD) tube, its manufacture, and installation in a pressurized water reactor (PWR) is disclosed. The control rod drive tube includes a tube body adapted to penetrate an aperture in the RPV head and an offset flange formed around a circumference of the tube body at a predetermined location along its length. The offset flange increases circumferentially from a first point along the circumference of the tube body to a second point along the circumference of the tube body.

## Description

### BACKGROUND OF THE INVENTION

This application relates to control rod drive (CRD) tubes, their manufacture, and installation in a pressurized water reactor (PWR) and, more particularly, to reactor pressure vessel (RPV) head penetrations that eliminate J-groove type weld attachments.

Service experience with the control rod drive mechanism (CRDM)/control element drive mechanism (CEDM) penetrations in pressurized water reactors (PWRs) worldwide has confirmed primary water stress corrosion cracking (PWSCC) in Alloy 600 tubes/welds at several plants. Since PWSCC was first reported in 1991, eddy current, liquid penetrant, and ultrasonic examination methods have been used to examine reactor vessel upper head penetrations. Several leaks originating from both inside and outside diameter initiated axial cracking of Alloy 600 penetrations as well as a few leaks from other locations with PWSCC have been discovered. In 2001 and 2002, the U.S. Nuclear Regulatory Commission (NRC) released bulletins that contain requests that utilities provide information relating to structural integrity of the tube penetrations, including the extent of leakage and cracking that has been found thus far, and inspections and repairs undertaken to mitigate the damage. In addition, the bulletins contain requests that utilities demonstrate that their future plans meet the regulatory requirements. The NRC's response to utilities actions on these bulletins has been to impose further requirements for inspection. Since 2001-02, it is believed that approximately one-third of the "higher risk" existing PWR vessel heads have been replaced at a cost ranging from $10-20M (U.S.) per replacement.

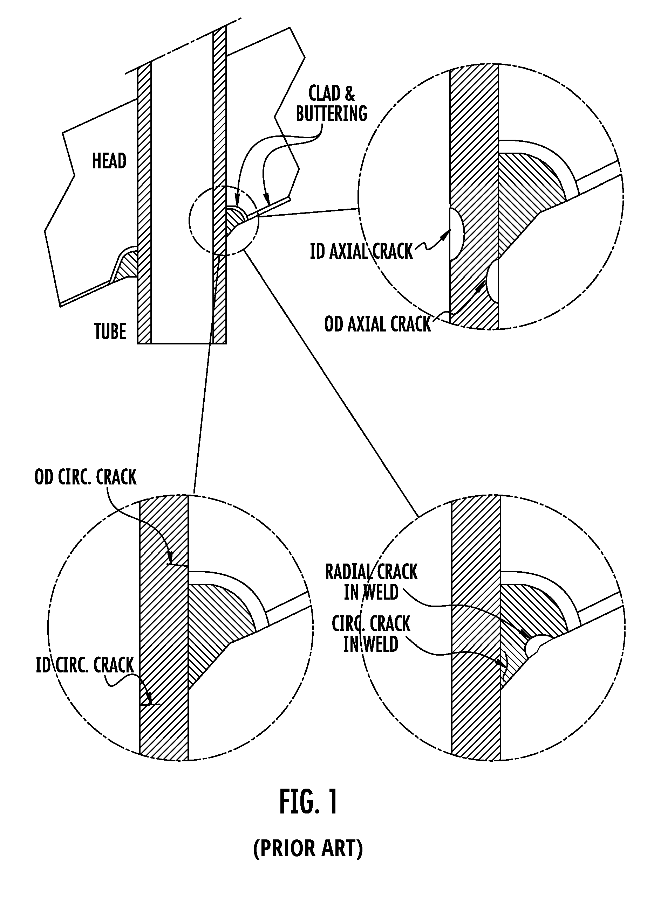

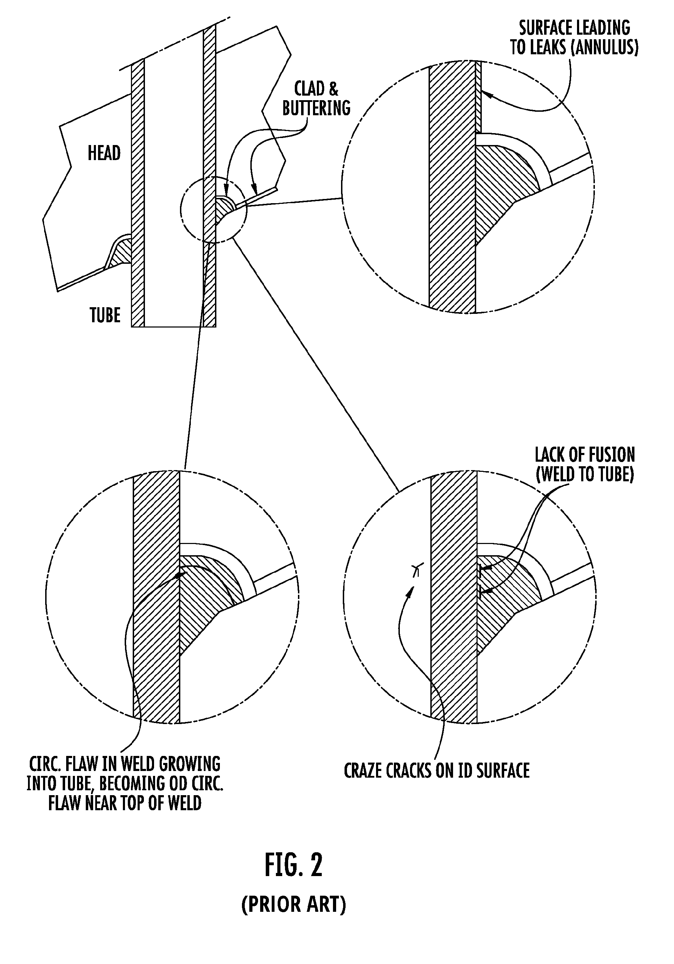

Inspection of existing CRDM penetrations continues to be a major issue for utilities operating PWRs due in part to the difficult geometry of the J-groove attachment weld, Figures 1 and 2, and in part due to the lack of access to the region as a result of high radiation fields. As shown in Figures 1 and 2, the geometry of the weld results in no fewer than nine potential flaw locations (or types of flaws), most of which can be attributed to the high stress field generated by the difficult weld geometry.

### BRIEF SUMMARY OF THE INVENTION

These and other shortcomings of the prior art are addressed by the present invention, which provides a manufacturing and fabrication method for new RPV head penetrations that completely eliminates the J-groove type CRDM attachment, thereby resulting in: (1) lower stress in the region (a primary driver of the PWSCC), (2) improved inspectability and access to the weld region, and (3) a higher quality CRD tube (produced via powder metallurgy/hot isostatic (PM/HIP) control methodology) which also aids in improved inspectability.

According to one aspect of the invention, a control rod drive (CRD) tube for installation into a reactor pressure vessel (RPV) head includes a tube body adapted to penetrate an aperture in the RPV head and an offset flange formed around a circumference of the tube body at a predetermined location along its length. The offset flange increases circumferentially from a first point along the circumference of the tube body to a second point along the circumference of the tube body.

According to another aspect of the invention, a method of installing a control rod drive (CRD) tube in a reactor pressure vessel (RPV) head includes the steps of providing a CRD tube having a tube body and an offset flange that increases circumferentially around the tube body from a first point to a second point. The method further includes the steps of inserting the CRD tube in an aperture of the RPV head such that the offset flange is positioned adjacent to a surface of the RPV head, wherein the positioning of the offset flange creates a V-groove between the offset flange and the RPV head; and welding the CRD tube to the RPV head using the V-groove.

### BRIEF DESCRIPTION OF THE INVENTION

The subject matter that is regarded as the invention may be best understood by reference to the following description taken in conjunction with the accompanying drawing figures in which:

Figures 1 and 2 show potential flaw locations associated with the current CRDM weld attachment design;

Figure 3 shows microstructural banding observed in the currently used CRD tube extrusions;

Figure 4 shows a PWR head assembly with control rod drive (CRD) tubes installed;

Figure 5 shows a CRD tube design and V-groove attachment according to an embodiment of the invention; and

Figure 6 is a top view of the CRD tube of Figure 5.

### DETAILED DESCRIPTION OF THE INVENTION

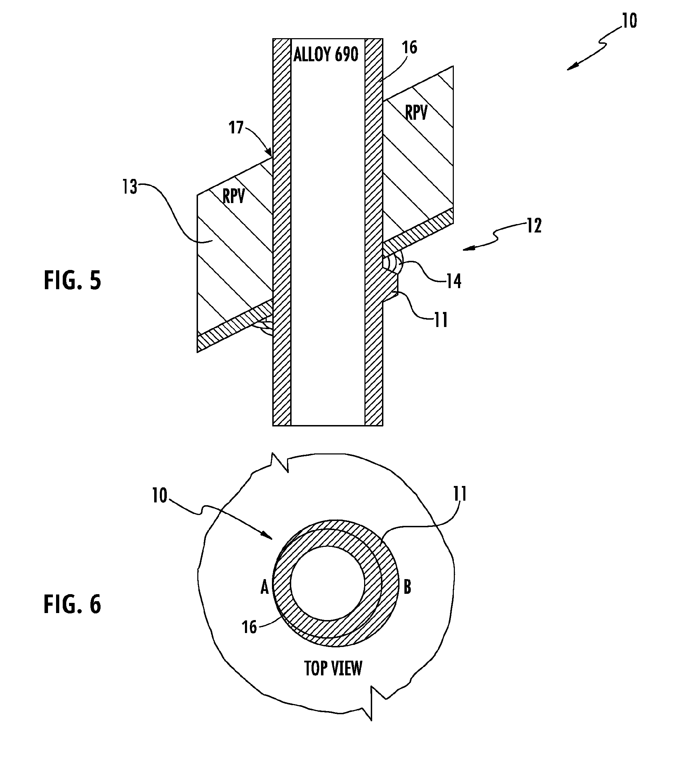

Referring to the drawings, a CRD tube formed in accordance with an embodiment of the invention is illustrated in Figure 5 and shown generally at reference numeral 10.

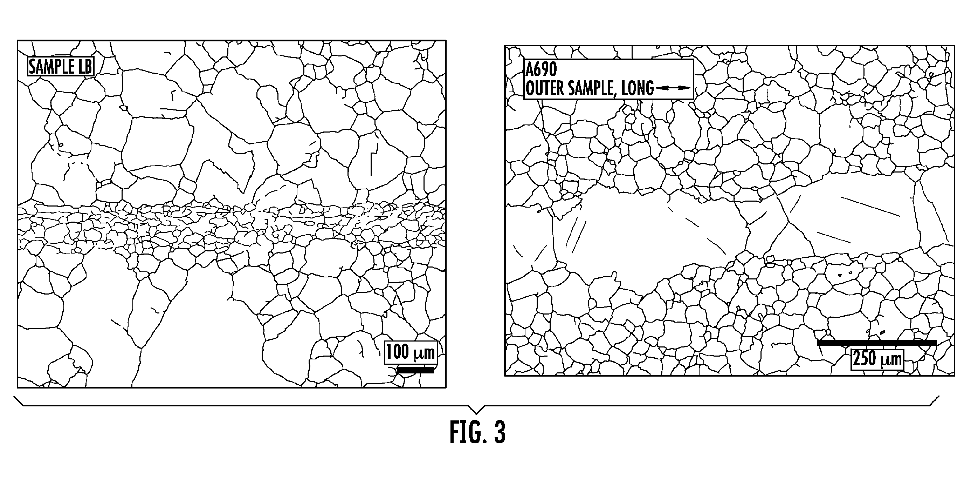

As mentioned above, the J-groove type CRDM attachment is completely eliminated using the CRD tube 10. Conventionally, CRD tubes have been produced to date using tube extrusion-type processes which result in a reasonably consistent tube geometry. The extrusion and subsequent heat treatment however, often generates a non-uniform microstructure, Figure 3, which includes banding and is attributed to the high extrusion forces required for a nickel-based alloy. The non-uniform microstructure significantly complicates the overall inspection process.

As shown in Figure 5, the CRD tube 10 uses a tube geometry that enables a V-groove weld geometry to be employed. The CRD tube 10 includes a tube body 16 adapted to penetrate an aperture 17 of a reactor pressure vessel (RPV) head 13 and an off-set flange 11 adapted to be positioned at a penetration region of a weld attachment or adjacent to a surface of the RPV head 13.

As illustrated, the off-set flange 11 increases circumferentially around the tube body 16 from point A to point B and creates a V-groove 12 between the off-set flange 11 and the RPV head 13 to allow the use of a lower stress V-groove penetration weld 14. As illustrated, the offset flange 11 is integrally formed with the tube body 16 and provides minimal offset at point A and maximum offset at point B disposed about one-hundred and eighty degrees from point A. It should be appreciated that the offset flange may have a maximum offset at a point less than or more than one-hundred and eighty degrees.

By eliminating the J-groove weld configuration currently employed by industry, a number of the flaws observed by industry (see Figure 1) are eliminated entirely. Additionally, the V-groove penetration weld 14 may be performed using various nickel-based fillers. For example, an earlier industry standard (Alloy 82/182) could be used to complete the entire weldment with the exception of the weld cap. The weld cap would be performed with a more corrosion-resistant alloy such as Alloy 52/152.

The CRD tube 10 is produced using a powder metallurgy/hot isostatic pressing (PM/HIP) process and CNC machining. Another way of producing the CRD tube 10 is to produce a much thicker extrusion and then machine massive amounts of the material away to reach a final geometry; however, such an approach is cost prohibitive. Using PM/HIP process provides both a uniform and homogeneous tube geometry and microstructure.

The PM/HIP process makes the manufacture/fabrication approach cost effective and, more importantly, addresses the major concerns associated with today's less than desirable geometry. In particular:
- It significantly reduces the stresses in the region (eliminating a primary driver for PWSCC)
- It improves inspectability and access to the weld and weld region. In doing so, it enables utilities to more adequately meet NRC inspection requirements/mandates.
- It provides a much higher quality tube with a consistent homogeneous microstructure (produced via PM/HIP) significantly improving the inspectability of the tube itself.

In addition, the PM/HIP approach takes full advantage of the process' ability to produce near net shaped parts resulting in a final product that requires minimal machining or cleanup. Further, the PM/HIP process would allow a stainless transition piece to be incorporated into the tube 10 structure so that a flange may be attached without performing a dissimilar metal weld (DMW).

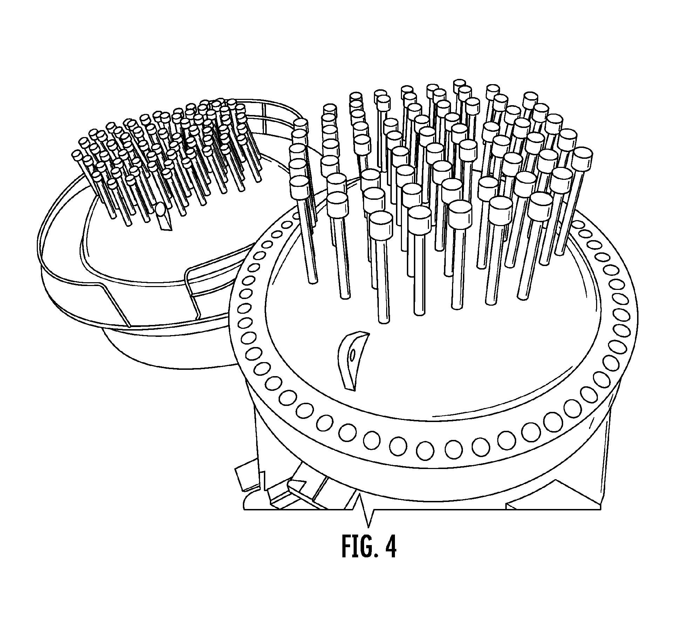

As shown in Figure 4, a conventional PWR RPV head is configured with more than 50 CRD tubes that are aligned in 4 to 6 concentric circles around the center of the head. Each concentric circle results in a somewhat different penetration attachment angle. Thus, the CRD tube 10 can easily be manufactured using the above process to work for all cases, 4 to 6 different geometries will be required. These are easily facilitated with the PM/HIP process due to the flexibility of the process in making different geometries and configurations. Furthermore, it is also anticipated that the process described herein may be applied to both PWR and advanced PWR assemblies.

The foregoing has described a control rod drive (CRD) tube, its manufacture, and installation in a pressurized water reactor (PWR). While specific embodiments of the present invention have been described, it will be apparent to those skilled in the art that various modifications thereto can be made without departing from the spirit and scope of the invention. Accordingly, the foregoing description of the preferred embodiment of the invention and the best mode for practicing the invention are provided for the purpose of illustration only and not for the purpose of limitation.

## Claims

1. A control rod drive (CRD) tube for installation into a reactor pressure vessel (RPV) head, comprising:
(a) a tube body adapted to penetrate an aperture in the RPV head; and
(b) an offset flange formed around a circumference of the tube body at a predetermined location along its length, wherein the offset flange increases circumferentially from a first point along the circumference of the tube body to a second point along the circumference of the tube body.

2. The CRD tube according to claim 1, wherein the offset flange is adapted to reside adjacent the RPV head to create a V-groove between the offset flange and RPV head for welding the CRD tube to the RPV head.

3. The CRD tube according to claim 1, wherein the offset flange at the first point has about zero protrusion from a sidewall of the tube body and increases circumferentially in size from the first point around opposing sides of the tube body, such that the maximum offset is located at the second point located one-hundred and eighty degrees from the first point.

4. The CRD tube according to claim 1, wherein the tube body and offset flange are formed using a powder metallurgy/hot isostatic pressing process (PM/HIP) to create a CRD tube having a consistent homogeneous microstructure.

5. The CRD tube according to claim 1, wherein the tube body and offset flange are integrally formed.

6. A method of installing a control rod drive (CRD) tube in a reactor pressure vessel (RPV) head, comprising the steps of:
(a) providing a CRD tube having:
(i) a tube body; and
(ii) an offset flange that increases circumferentially around the tube body from a first point to a second point;
(b) inserting the CRD tube in an aperture of the RPV head such that the offset flange is positioned adjacent to a surface of the RPV head, wherein the positioning of the offset flange creates a V-groove between the offset flange and the RPV head; and
(c) welding the CRD tube to the RPV head using the V-groove.

7. The method according to claim 6, wherein the step of welding includes the step of using a low stress penetration weld.
